# EUROPÄISCHE PATENTANMELDUNG

(11) **EP 2 273 225 A2**
(43) Veröffentlichungstag der Anmeldung: **12.01.2011**
(21) Anmeldenummer: 10005927.8
(22) Anmeldetag: 09.06.2010
(51) Int. Cl.: F28D 20/00

(54) **Langzeit-Energiespeicher**

(30) Priorität: 09.06.2009 DE 102009024878
(71) Anmelder: Eckardt, Marco, 99628 Rudersdorf (DE); Hegele, Robert, 88213 Ravensburg (DE)
(72) Erfinder: Eckardt, Marco, 99628 Rudersdorf (DE)
(74) Vertreter: Otten, Herbert

(57) **Zusammenfassung**

Es wird ein Langzeit-Energiespeicher (1) für thermische Energie zur Speicherung von Sonnenwärme, Prozesswärme oder Abwärme vorgeschlagen, umfassend einen vorzugsweise zylindrischen Behälter zur Aufnahme eines Energiespeichermediums, Mittel (4) zur Zuführung und Entnahme von Energie aus dem Speicher, wobei der Behälter eine Bodenplatte (22), eine umlaufende Seitenwand (3) und einen Deckel (2) umfasst und wobei der Boden, die Seitenwände und der Deckel gegenüber der Umgebung thermisch isoliert ausgebildet sind.

Erfindungsgemäß ist die Seitenwand (3) von einer Armierung aus einem Faserverbundwerkstoff (11) umgeben.

## Beschreibung

Die Erfindung bezieht sich auf einen Langzeit-Energiespeicher für thermische Energie zur Speicherung von Sonnenwärme, Prozesswärme oder Abwärme nach dem Oberbegriff des Patentanspruchs 1.

### Stand der Technik

Energiespeicher zur Speicherung von Wärmeenergie, welche vorzugsweise eine zylindrische Form aufweisen und zur Aufnahme eines Energiespeichermediums ausgebildet sind, wie beispielsweise Wasser, sind in einer Vielzahl von unterschiedlichen Ausführungsformen bekannt.

Herkömmliche Energiespeicher umfassen beispielsweise einen isolierten, mit einem Deckel verschließbaren, flüssigkeitsdichten Behälter mit einem darin angeordneten Wärmetauscher. Die Energiespeicher eignen sich zur Aufstellung im oder auf dem Erdreich. Sie werden vorzugsweise beim Hersteller vorgefertigt und als komplette Speichereinheit an den Ort ihrer Verwendung angeliefert und an den Wärmekreislauf angeschlossen. Dabei stellt die Menge des Speichermediums und die daraus resultierende Wärmekapazität ein Auswahlkriterium für die Größe und den Aufstellort dar.

Bekannt ist, dass Wärmespeicher, insbesondere wassergefüllte Wärmespeicher gegenüber herkömmlichen Wasserspeichern gegenüber der Außenumgebung wärmegedämmt werden, um einen Verlust der Wärmeenergie zu vermeiden. Ein zylinderförmig ausgebildeter Wärmespeicher zur Aufnahme großer Wassermengen (>20 m³) stellt unter Berücksichtigung der Statik als auch mit Bezug auf den zu minimierenden Wärmeverlust eine Herausforderung an eine herzustellende Ausführungsform eines Wärmespeichers dar.

In der Druckschrift DE 10 2006 019 339 B3 wird ein Wärmespeicher für das Speichermedium Wasser gezeigt. Der Speicher besteht dabei aus Wasser und einem festen Baustoff, der eine Struktur mit Hohlräumen zur Aufnahme des Wassers aufweist. Weiterhin umfasst der Speicher eine statisch tragfähige Struktur, welche überbaut werden kann und wasserdurchlässige und hygroskopische Eigenschaften aufweist. Der Baustoff ist dabei ein Schaumprodukt oder ein Baustoff aus mehreren gleichen und/oder unterschiedlichen festen Baustoffen, die miteinander fest verbunden sind. Der Wärmespeicher wird vor Ort durch Auskleiden eine Erdgrube mit einer Dichtfolie und anschließendem Ausgießen mit dem Wasser speichernden Baustoff hergestellt.

Nachteilig an dieser Ausgestaltung ist, dass der vor Ort herzustellende Wärmespeicher lediglich für eine Aufstellung bzw. Herstellung im Erdreich ausgebildet, und dessen Herstellung kompliziert und teuer ist. Darüber hinaus sind entstehende Undichtigkeiten durch eventuelle Erdbewegungen möglich und sehr gefährlich, sollte über dem im Erdreich angeordneten Wärmespeicher beispielsweise ein Gebäude oder ein Weg vorgesehen sein.

Zur Umgehung der Nachteile hat sich die vorliegende Erfindung die Aufgabe gestellt, einen Energiespeicher zur Speicherung von Wärmeenergie derart weiterzubilden, dass die Herstellung des Energiespeichers einfacher und kostengünstiger möglich ist.

Zur Lösung der Aufgabe ist die Erfindung durch die Merkmale des Patentanspruchs 1 gekennzeichnet.

Vorteilhafte Erweiterungen der Erfindung sind in den abhängigen Ansprüchen beschrieben.

### Offenbarung der Erfindung

Die Erfindung geht von einem Langzeit-Energiespeicher für thermische Energie zur Speicherung von Sonnenwärme, Prozesswärme oder Abwärme aus, umfassend einen vorzugsweise zylindrischen Behälter zur Aufnahme eines Energiespeichermediums, Mittel zur Zuführung und Entnahme von Energie aus dem Speicher, wobei der Behälter eine Bodenplatte, eine umlaufende Seitenwand und einen Deckel umfasst, und wobei der Boden, die Seitenwände und der Deckel gegenüber der Umgebung thermisch isoliert ausgebildet sind.

Der erfindungsgemäße Langzeit-Energiespeicher ist zur Herstellung vor Ort und zur Aufstellung im oder auf dem Erdreich vorgesehen.

Der Kern der Erfindung liegt darin, dass der Energiespeicher, insbesondere die Seitenwand von einer verstärkenden Armierung aus einem Faserverbundwerkstoff umgeben bzw. gehalten ist.

Die vorzugsweise zylindrische Mantelfläche der Außenwand des erfindungsgemäßen Energiespeichers weist auf ihrer Oberfläche einen Faserverbundwerkstoff, beispielsweise ein Glasfaserwerkstoff auf, der vorzugsweise mit Feinbeton als Bindemittel auf der Oberfläche angeordnet wird. Vorteil ist, dass die angeordneten Glasfasermatten in der Art einer Glasfaserarmierung den Energiespeicher mit vorteilhaften statischen Eigenschaften versehen. Des Weiteren weist die Ummantelung des Energiespeichers mit einem Faserverbundwerkstoff den Vorteil auf, dass der Energiespeicher eine verbesserte Lebensdauer erhält, da, vor allem im Vergleich zu einem Metallbehälter, ein zusätzlicher Korrosionsschutz durch den Faserverbundwerkstoff im Vergleich zu einem erforderlichen Korrosionsschutz für Stahlarmierungen nicht erforderlich ist.

Vorteilhafterweise kann die Wanddicke des erfindungsgemäßen faserverbundverstärkten Energiespeichers im Vergleich zu den Wanddicken von Betonspeichern, welche ggf. mit Stahlarmierungen versehen sind, verringert werden.

In einer bevorzugten Ausgestaltung der Erfindung ist vorgesehen, dass die Seitenwand als gemauerte Wand insbesondere als Ziegelwand ausgebildet ist. Eine gemauerte, umlaufende Seitenwand des Energiespeichers weist den Vorteil auf, dass der erfindungsgemäße Langzeit-Energiespeicher vor Ort hergestellt werden kann, wodurch insbesondere bei sehr großen Speichervolumina hohe Transportkosten für einen vorgefertigten, kompletten Energiespeicher vermieden werden. Darüber hinaus weist eine als Ziegelwand gemauerte Seitenwand eines Energiespeichers den Vorteil auf, dass die Hohlräume eines Ziegels eine Isolation des Energiespeichers bilden.

In einer überdies bevorzugten Ausgestaltung der Erfindung ist vorgesehen, dass die Bodenplatte als Mehrschichtsystem, insbesondere als Schichtsystem aus mindestens je einer Sauberkeitsschicht, einer Isolationsschicht, einer Stützschicht und/oder einer Dichtschicht bestehend ausgebildet ist.

Der Aufbau einer Bodenplatte als Mehrschichtsystem weist den Vorteil auf, dass die Materialien der einzelnen Schichten zum Aufbau eines Mehrschichtsystems den örtlichen Gegebenheiten und den konstruktiven Anforderungen angepasst werden können. Eine Sauberkeitsschicht sorgt im Kontaktbereich des Energiespeichers mit dem Untergrund für eine Aufbaubasis, welche vorgegebene und bewährte Eigenschaften aufweist, um den Energiespeicher darauf aufzubauen.

Eine Isolationsschicht dient zur Wärmeisolation des Energiespeichers gegenüber dem Untergrund.

Eine Stützschicht ist zur Aufnahme und Verteilung der auftretenden Kräfte durch das Gewicht des Speichermediums erforderlich, wobei die Stützschicht entweder eine rein statische Funktion erfüllt, oder gleichzeitig, bei entsprechender Materialauswahl oder Materialkombination, die Funktion der Dichtschicht umfassen kann.

Vorzugsweise sieht eine weitere Ausgestaltung der Erfindung vor, dass die Sauberkeitsschicht vorzugsweise aus Beton, insbesondere aus Stahlbeton gebildet ist. Die Bildung einer Sauberkeitsschicht aus Beton bzw. Stahlbeton weist den Vorteil auf, dass die Bodenplatte insgesamt mit einer höheren Festigkeit ausgestattet wird.

Überdies ist in einer weiteren Ausgestaltung der Erfindung vorgesehen, dass die Dichtschicht als kombinierte Dicht- und Stützschicht Beton und/oder Stahlbeton umfasst, und mit einem darauf angeordneten Dichtmittel versehen ist. Es ist vorteilhaft, dass die Dichtschicht zur Verbesserung der statischen Eigenschaften aus Beton hergestellt ist, auf welcher eine Folie zur Abdichtung des Energiespeichers angebracht wird. Es ist auch denkbar, die Abdichtung der Betonschicht durch einen flüssigkeitsdichten Farbanstrich auszuführen. Darüber hinaus kann die Dichtschicht auch aus oder in Kombination mit einem Faserverbundwerkstoff, wie beispielsweise Glasfaserverbundstoff (GFK) gebildet werden. Aufgrund der unterschiedlichen Materialien, welche zur Bildung einer Dichtschicht zur Verfügung stehen kann diese an die örtlichen Gegebenheiten und die erforderliche Statik zur Herstellung eines Langzeit-Energiespeichers angepasst werden.

Weiterhin ist in einer bevorzugten Ausgestaltung der Erfindung vorgesehen, dass die Isolationsschicht zumindest teilweise aus Schauglas, insbesondere aus einzelnen Schaumglas-Bausteinen besteht. Im Fall der Schaumglasbausteine können gegebenenfalls die Zwischenräume zwischen dem Schaumglas in der Isolationsschicht Polymerschaum, insbesondere geschäumtes Polystyrol umfassen. Die Isolationsschicht zur Isolierung des Energiespeichers im Bodenbereich wird auf der Sauberkeitsschicht angeordnet. Aufgrund der extremen auftretenden Kräfte (beispielsweise der Wassermasse), welche über die Stützschicht auf die Isolationsschicht übertragen werden, ist die Materialauswahl zum Aufbau der Isolationsschicht für die Bodenplatte von besonderer Wichtigkeit.

Die ausschließliche Verwendung eines herkömmlichen Isolationsmaterials zum Aufbau einer Isolierschicht, wie beispielsweise Polystyrol, würde das zur Verfügung stehende Speichervolumen eines derartigen Energiespeichers stark einschränken, da die auftretenden Kräfte das relativ weiche Isoliermaterial zerdrücken. Bei einem geeigneten Isolationsmaterial wie beispielsweise Schaumglas oder Schaumbeton kann der erfindungsgemäße Langzeit-Energiespeicher mit großem Volumeninhalt unter Ausnutzung von hervorragenden Isolationswerten bei großer Festigkeit hergestellt werden. Die Verwendung von Schaumglas oder Schaumbeton als Isolationsmaterial zum Aufbau eines erfindungsgemäßen Langzeit-Energiespeichers verbessert die Beständigkeitsseigenschaften einer Isolationsschicht gegenüber einer Isolationsschicht mit herkömmlichem Isolationsmaterial, wie beispielsweise Polystyrol.

Für das Erreichen der erforderlichen Festigkeitswerte der Isolationsschicht bei minimiertem Materialaufwand ist es vorteilhaft, dass auf der Sauberkeitsschicht Schaumglas- oder Schaumbeton-Bausteine in Verbindung mit Polystyrol-Bausteinen angeordnet werden. Die Schaumglas- oder Schaumbetonbausteine weisen eine sehr hohe Festigkeit auf, wodurch ein unerwünschtes Zusammendrücken der Isolationsschicht durch den Schweredruck des Speichermediums vernieden wird.

Überdies ist in einer weiteren Ausgestaltung der Erfindung vorgesehen, dass die Seitenwand als Mehrschichtsystem, insbesondere eine Dichtschicht, vorzugsweise aus einem Faserverbundwerkstoff, eine Formschicht, vorzugsweise einer Ziegelwand, eine Armierungsschicht, vorzugsweise aus einem gewebearzigen Faserverbundwerkstoff, sowie eine Isolationsschicht, vorzugsweise aus einem Polymerschaum, umfassend ausgebildet ist.

Der Aufbau einer Seitenwand als Mehrschichtsystem hat den Vorteil, dass der erfindungsgemäße Langzeit-Energiespeicher vor Ort in einfachster Art und Weise selbsttragend aufbaubar ist und entsprechend seiner geplanten Verwendung mit unterschiedlich dicken Wandstärken verschiedenartiger Materialien aufgebaut werden kann. Dies ist insbesondere für Langzeit-Energiespeicher von Vorteil, deren Behälter derart groß sind, dass für einen ab Werk vorgefertigten Energiespeicher ein Transport sehr kostenintensiv oder nahezu unmöglich wird. Des Weiteren können Materialien verwendet werden, welche aufgrund ihrer physikalischen Eigenschaften zusätzlich zu den Festigkeitseigenschaften Isolationseigenschaften aufweisen. Insbesondere bildet eine aus Ziegeln oder Schaumbeton hergestellte Seitenwand, aufgrund der eingeschlossenen Hohlräume der Ziegelsteine eine zusätzliche Isolation aus.

In einer weiteren Ausgestaltung der Erfindung ist es von Vorteil, dass die Seitenwand auf der Behälteraußenseite zumindest teilweise von einer Stützschicht, vorzugsweise aus Beton, umgeben ist. Die Stützschicht auf der Seitenwand schützt einen im Erdreich angeordneten Langzeit-Energiespeicher vor seitlichen Krafteinwirkungen und daraus resultierenden Deformationen an der Seitenwand des Energiespeichers durch eventuelle Erdbewegungen des angeschütteten Erdreiches und die dadurch auftretenden Kräfte auf die Seitenwand. Darüber hinaus kann eine Stützschicht an der Seitenwand des Energiespeichers die Gesamtfestigkeit des Speichers sowie die Isolationseigenschaften verbessern.

In einer weiteren Ausgestaltung der Erfindung ist es bevorzugt, dass der Deckel als Beton-Balken-Aufbau kombiniert mit Isolationsmaterialien ausgebildet ist. Ein Langzeit-Energiespeicher mit einem großen Speichervolumen weist oftmals einen entsprechend großen Durchmesser (mehrere Meter) auf. Um die obenseitige Öffnung eines erfindungsgemäß aufgebauten Energiespeichers zu verschließen muss ein Deckel vorgesehen werden, welcher in der Lage ist, die Öffnung des Speichers vollständig abzudecken. Der Deckel wird entsprechend dem Behälter direkt vor Ort gefertigt, wodurch ein kostenaufwendiger Transport entfällt. Die Montage bzw. die Fertigung erfolgt direkt auf der Seitenwand wodurch ein entsprechendes Hebewerkzeug, beispielsweise ein Kran, nicht erforderlich ist und weitere Kosten einspart. Um das Gewicht des Deckels und somit die Anforderungen an die Statik so gering wie möglich zu halten, wird bei der Herstellung des Deckels ein Beton-Balken Aufbau gewählt, bei welchem Isolationsmaterial mit Beton-Balken umgeben werden, wobei die Balken die notwendige statische Stabilität erzeugen. Das verwendete Isolationsmaterial weist, ebenso wie die Betonstruktur einen balkenförmigen Aufbau auf, wobei das balkenförmige Isolationsmaterial, beispielsweise Extruderschaum bzw. Fertigteile aus Polystyrol auf die Seitenwand aufgelegt und von unten abgestützt wird. Es werden Stahlarmierungen ein- bzw. aufgelegt und der Beton auf den Aufbau aufgegossen. Die Stützstruktur kann nach dem Aushärten des Betons durch eine Montageöffnung im Deckel entfernt werden. Vorteil ist ein einfacher und schneller Aufbau eines Deckels vor Ort, der in den Schaumteilen integrierte Schalungselemente aufweist. Der Deckel bildet ein verringertes Eigengewicht, wobei kein Wasser in das Isolationsmaterial aufgrund der geschlossenen Porenstruktur eindringen kann.

In einer weiteren Ausgestaltung der Erfindung ist es bevorzugt, dass der Deckel schwimmend auf dem Energiespeichermedium, vorzugsweise auf Wasser, gelagert ausgebildet ist. Aufgrund des Anteils von Isolationsmaterial im gebildeten Deckel kann dieser schwimmend auf der Oberfläche des Speichermediums, beispielsweise auf Wasser aufgelegt werden, wodurch die Anforderung an die statischen Eigenschaften des Deckels wesentlich verringert werden können. Bei Abstimmung auf den lichten Querschnitt des Energiespeicherbehälters kann der Deckel am Boden des Behälters aufgebaut werden, und im Zuge des Füllvorgangs mit Speichermedium bis zur Füllhöhe aufschwimmen. Dabei kann auf seitliche Stützflächen an der Seitenwand zur Auflage des Deckels auf den Rand des Langzeit- Energiespeicher verzichtet werden, wobei eine ausreichende Isolation, beispielsweise durch Vorsprünge am oberen Rand der Außenwand, zu etablieren ist. Hierdurch ist ein zusätzliches Anheben des Deckels nicht erforderlich, da dieser aufgrund von Auftriebskräften im Wasser auf der Wasseroberfläche schwimmt.

Überdies wird in einer weiteren Ausgestaltung der Erfindung vorgesehen, dass der Deckel auf der Seitenaufwand aufliegend gehalten wird, wobei vorzugsweise zwischen Seitenwand und Deckel zumindest teilweise ein Isolationskörper, insbesondere Schaumglas eingebettet ist. Der Deckel wird teilweise auf die Stirnfläche der gebildeten Seitenwand aufgelegt, wobei der Isolationskörper zwischen der umlaufenden Randoberfläche des Deckels und der Innenfläche der über die Seitenwand hinausragenden Isolationsschicht angeordnet ist. Die Isolationseigenschaften zwischen Deckel und Seitenwand des Energiespeichers werden hierdurch optimiert und ein möglichst geringes bis nahezu vernachlässigbares Wärmeleck entsteht.

Allgemein ist der erfindungsgemäße Langzeit-Energiespeicher als druckloser Speicher ausgebildet, wodurch weitere, sicherheitsrelevante Maßnahmen entsprechend einem Druckbehälter nach der Druckbehälterverordnung nicht erforderlich sind. Je nach genutztem Speichermedium können jedoch auch Temperaturen oberhalb der Siedetemperatur von Wasser im Speichermedium erreicht werden, beispielsweise indem siedeverzögernde Zusätze beigegeben oder gänzlich andere Medien genutzt werden.

Weitere Merkmale der Erfindung gehen aus der nachfolgenden Figurenbeschreibung zu dem hier dargestellten Ausführungsbeispiel hervor.

Dabei zeigen:
- Figur 1:: eine Schnittdarstellung eines Langzeit- Energiespeichers in einer Baugrube mit auf der Seitenwand aufliegendem Deckel;
- Figur 2:: eine Draufsicht der blockweise aufgebauten Isolationsschicht der Bodenplatte,
- Figur 3:: eine Schnittdarstellung eines Langzeit- Energiespeichers auf einer Oberfläche mit einer alternativen Deckelkonstruktion,
- Figur 4:: eine ausschnittsweise Darstellung einer Deckelkonstruktion mit schwimmend gelagerter Drehscheibe,
- Figur 5:: eine schematische Aufbaustruktur-Darstellung eines Deckels.

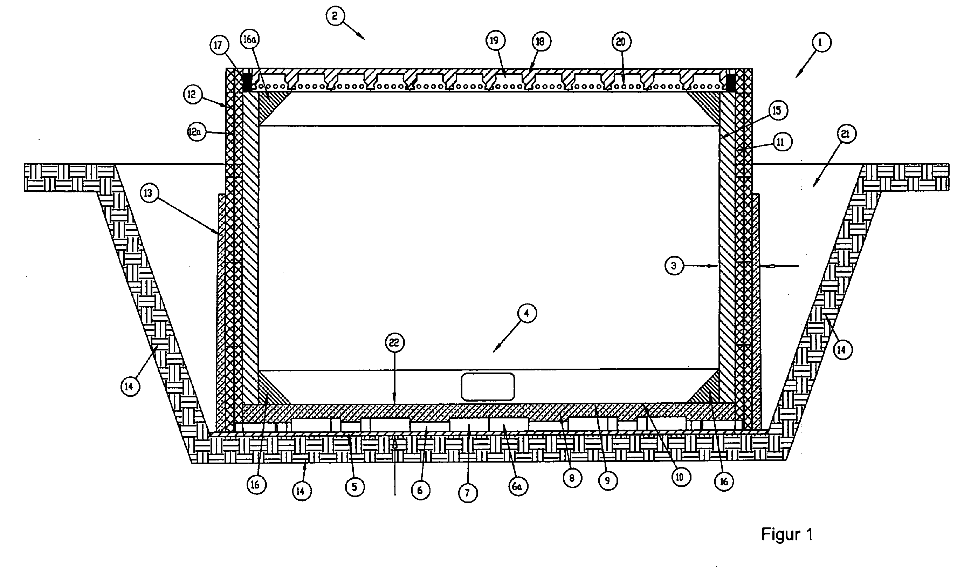

In Figur 1 ist ein Langzeit-Energiespeicher 1 gezeigt, der in einer Baugrube 21 angeordnet ist und eine mehrschichtige Bodenplatte 22, eine mehrschichtige Seitenwand 3 und einen auf der Seitenwand aufliegenden, isolierten Deckel 2 umfasst. Im Innenraum des gebildeten Langzeit-Energiespeichers 1 ist mindestens ein Wärmetauscher 4 zur Einleitung und/oder Entnahme der erwünschten Wärmeenergie angeordnet.

Die mehrschichtige Bodenplatte umfasst auf der zum Erdreich 14 gerichteten Seite eine Sauberkeitsschicht 5, welche vorzugsweise aus Beton, eventuell auch aus Stahlbeton gebildet ist. Die Sauberkeitsschicht 5 weist einen ausreichenden Durchmesser auf, um einen mehrschichtigen Seitenwandaufbau mit allen erforderlichen Isclations- bzw. Stützschichten im Randbereich aufzunehmen.

Auf der Oberfläche der Sauberkeitsschicht 5 ist eine Isolationsschicht 7 angeordnet, die zwischen plattenförmig ausgebildeten Isolationsschicht-Elementen 6a aus Polystyrol zusätzlich Elemente aus einer Schaumglasisolation 6 aus einzelnen Schaumglas-Bausteinen aufweist.

Die Dicke der Isolationsschicht 7 ist entsprechend den erforderlichen Isolationswerten für einen Langzeit-Energiespeicher 1 angepasst. Die Schaumglasisolation 6 kann aufgrund ihrer hervorragenden Festigkeitseigenschaften mit einem Flächenanteil von etwa 20% mit Bezug auf die Gesamtfläche der Isolationsschicht 7 auf der Sauberkeitsscricht 5 angeordnet werden, um der gesamten Isolationsschicht 6 ausreichend Stabilität zu verleihen. Auf diesem Weg wird die Verwendung des kostenintensiven Werkstoffes Schaumglas oder Schaumbeton minimiert, und trotzdem eine ausreichende Isolation und Stabilität für den Langzeit-Energiespeicher 1 gewährleistet.

Im Anschluss an die Isolationsschicht 7 schließt sich eine Betonschicht 8 an, welche durch einen entsprechenden Gießvorgang vor Ort hergestellt wird. Die Betonschicht wird vorteilhafterweise als Stahlbeton aufgebaut, um dem erheblichen Druck des Speichermediums (Wasser) bei gefülltem Behälter Stand halten zu können. Auf der Oberfläche der Betonschicht 8 wird in einem nachfolgenden Arbeitsgang eine Dichtschicht 9 angeordnet, die ein Austreten des Energiespeichermediums aus dem Innenraum des Energiespeichers 1 verhindert.

Im radial nach außen gerichteten Randbereich der Bodenplatte 22 wird die Seitenwand 3 als gemauerte Ziegelwand aufgebaut. Zum Erreichen der entsprechenden Festigkeitswerte für den mit Wasser gefüllten Energiespeicher 1 ist die Außenoberfläche der gemauerten Seitenwand 3 mit einem Faserverbundwerkstoff 11 umgeben, wobei der Faserverbund in der Art einer Armierung auf der Oberfläche der Seitenwand 3 angeordnet ist. Die aus einem Faserverbundwerkstoff 11 gebildeten Schichten stützen den Energiespeicher 1 ab und erhöht die Druckstabilität von Innen nach Außen. Über die gemauerte Wand und die Faserverstärkung wird der Energiespeicher formstabil und selbsttragend, so dass auch ein Aufbau auf der Geländeoberfläche ohne weiteres möglich wäre. Die Armierung wird durch Glasfaserbahnen, welche bei der Anbringung an der Wand mit einem Feinbeton als Bindemittel umgossen werden, gebildet. Der Feinbeton und die Glasfaser bilden nach deren Aushärtung eine Faserverbundschicht aus, welche die benötigten Festigkeitseigenschaften aufweist.

An der aus einem Faserverbundwerkstoff 11 gebildeten Schicht schließt sich mindestens eine Isolationsschicht 12, 12a an, welche in der vorliegenden Ausführungsform aus Dämmstoffplatten und/oder aus einem Extruderschaum gebildet ist, der in einfachster Art auf die Außenoberfläche des Faserverbundwerkstoffes 11 aufgespritzt ist.

Für den Aufbau eines Energiespeichers 1 in einer Baugrube 21 weist die äußere Oberfläche der Isolationsschicht 12, 12a eine zusätzliche Stützschicht 13 auf, welche aus einem Betonmaterial gebildet ist und den Druck des angrenzenden Erdreichs auf den Energiespeicher aufnehmen soll. Auf der inneren Oberfläche der gemauerten Seitenwand 3 wird diese mit Glasfasermatten ausgekleidet, die beispielsweise mit einem entsprechenden Epoxydharz getränkt eine Dichtschicht 15

zusammen mit der Dichtschicht 9 im Bodenbereich für den Innenraum des Energiespeichers 1 bilden.

Der Energiespeicher 1 ist mit einem Deckel 2 verschlossen, der im montierten Zustand auf den Stirnflächen der gemauerten Seitenwand 3 aufliegt. Der Deckel ist aus Betonbalken 18 mit Stahlarmierungen aufgebaut, wobei parallel zu den Betonbalken nebeneinander liegende Isolationsmaterialien 19, vorzugsweise aus Polystyrol, vorhanden sind.

Der Energiespeicher 1 weist im oberen Randbereich einen Isolationskörper 17 auf, der vorzugsweise aus Schaumglas gebildet ist und eine zusätzliche Isolierung zwischen dem Deckel 2 und der äußeren Isolationsschicht 12, 12a auf der Seitenwand 3 bildet, und gleichzeitig die Auflagekraft des Deckelgewichts aufnehmen kann, ohne dabei zerdrückt zu werden.

Im Innenraum des Energiespeichers 1 ist mindestens ein Wärmetauscher 4 angeordnet, welcher über ein nach außen geführtes Rohrleitungssystem (hier nicht dargestellt) einen Energieaustausch im Speichermedium ausführt. Ein Ein- bzw. Ausleiten des Speichermediums nur durch ein Rohrleitungssystem ist ebenfalls möglich.

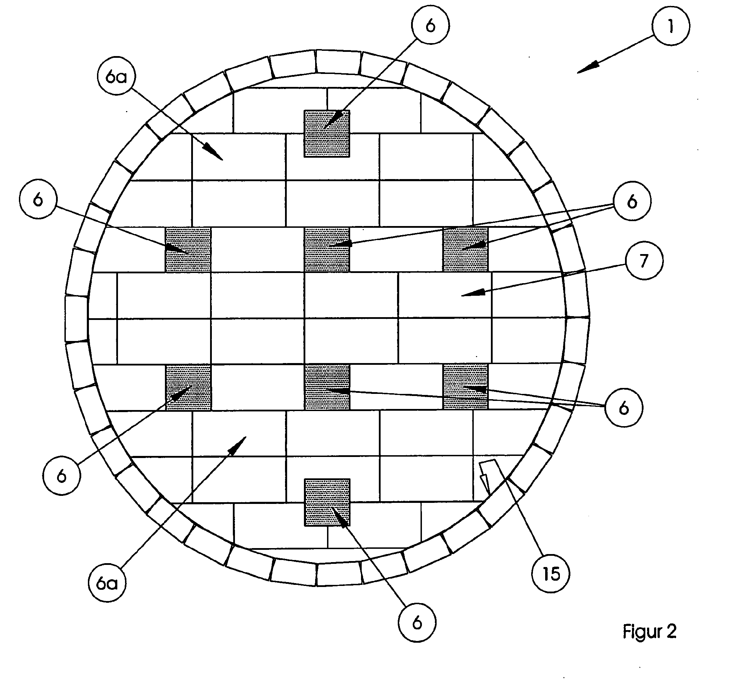

In Figur 2 ist eine Draufsicht der Isolationsschicht 7 gezeigt, wobei diese Isolationsschicht 7 aus einer Anordnung von plattenförmigen Isolationsmaterialien aus Polystyrol 6a und Schaumglasblöcken 6 besteht.

Die plattenförmige Schaumglasisolation 6 wird lediglich teilweise auf die Sauberkeitsschicht 5 (siehe Figur 1) angeordnet, wobei ein Anteil der Schaumglasisolation 6 von ca. 20 % am Gesamtanteil der Isolationsschicht 7 ausreicht, um die notwendige Festigkeit bereitzustellen.

Im Randbereich der Isolationsschicht (siehe Figur 1) wird eine Umrandung durch weitere Schaumglasblöcke 6 gebildet, auf welche in einem späteren Arbeitsschritt unter Zwischenlage der Stützschicht die Wand aus Ziegelsteinen aufgemauert wird.

Der vor Ort hergestellte Energiespeicher 1 ist für Volumina von einem Speichermedium zwischen 20m³ und 10.000 m³ oder größer ausgelegt, wobei eine Speichergröße des Energiespeichers 1 ab 50 m³ als wirtschaftlich interessant zu betrachten ist.

Das verwendete Speichermedium Wasser ist zur Speicherung einer Wärmeenergie bis zu einer Temperatur von ca. 100°C verwendbar, wobei der hier beschriebenen Energiespeicher 1 drucklos betrieben wird.

Alternativ können auch andere Speichermedien genutzt werden, welche eine ausreichend hohe Wärmekapazität zur Verfügung stellen. Exemplarisch sei hierbei auch auf granulare Medien, insbesondere auf feinen Sand verwiesen, wobei die Wärmetauscher zur Einbringung der Wärmeenergie in den Energiespeicher entsprechend angepasst werden müssen.

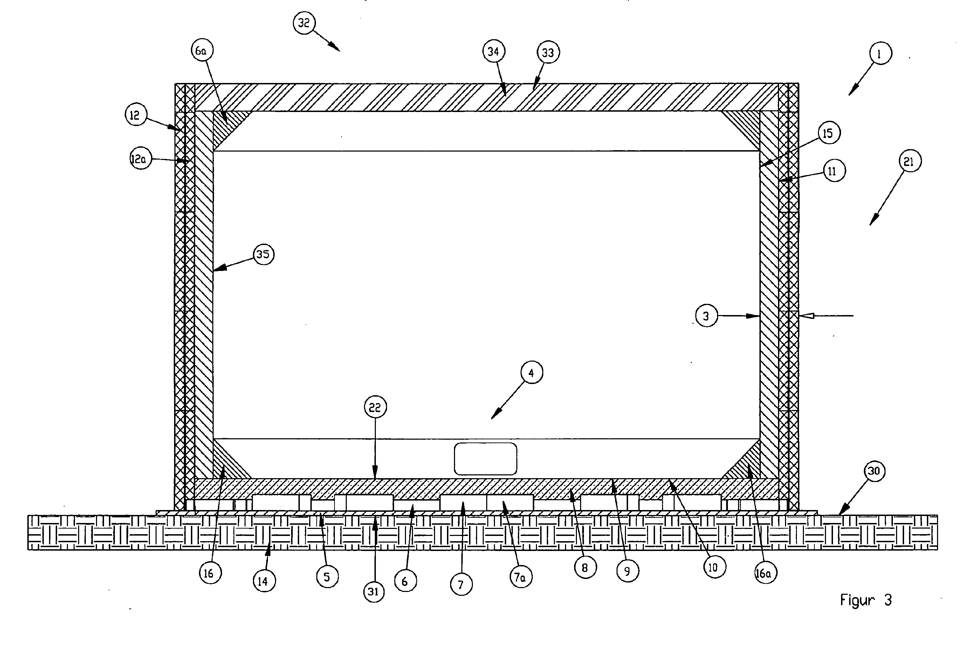

Figur 3 zeigt eine alternative Ausführungsform des erfindungsgemäßen Energiespeichers 1, welcher vorliegend nicht in einer Baugrube, sondern auf einer Oberfläche 30 errichtet ist. Entsprechende Bauteile, wie sie in Figur 1 bereits dargestellt sind, sind mit den gleichen Bezugszeichen gekennzeichnet.

Konstruktiv erfordert der Aufbau eines erfindungsgemäßen Energiespeichers 1 auf einer Oberfläche 30 keine Veränderung insbesondere gegenüber dem Wandaufbau einer Montage in einer Baugrube. Jedoch besteht beispielsweise beim Aufbau auf einer Oberfläche 30 die Möglichkeit, Kosten für die Bereitstellung einer Baugrube zu sparen, und/oder zur Verkleidung des Energiespeichers 1 ein darüber liegendes Gebäude, beispielsweise ein Gartenhaus oder eine Halle zu errichten. Im Falle des Aufbaus eines Energiespeichers auf einer Oberfläche 30 ist jedoch ein Fundament 31 erforderlich, welches in der Lage ist, die hohe Masse des später gefüllten Energiespeichers zu tragen.

Unabhängig von dem Aufbau des erfindungsgemäßen Energiespeichers 1 auf einer Oberfläche 30 oder in einer Baugrube besteht die Möglichkeit, den in Figur 1 dargestellten Deckel aus einer Betonbalkenkonstruktion, durch eine alternative Deckelkonstruktion in Form eines Schichtaufbaus zu ersetzen.

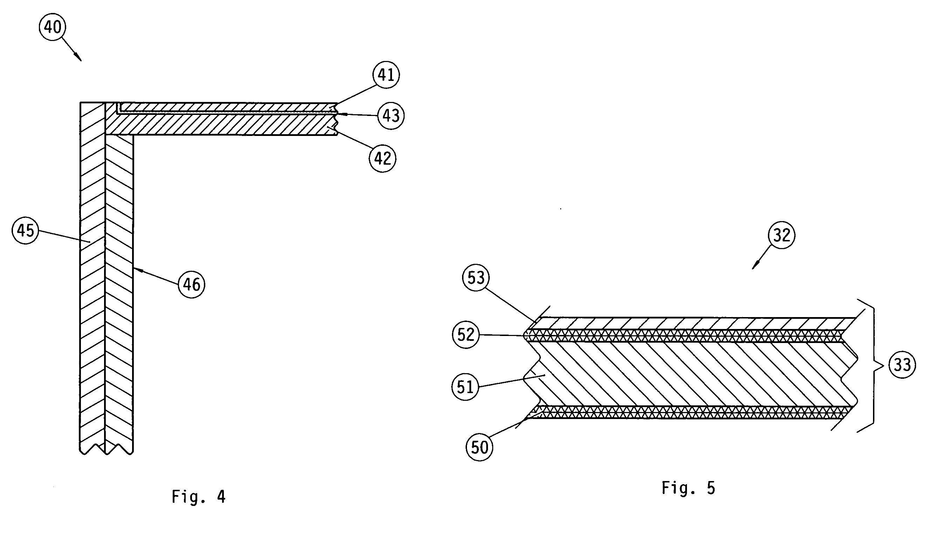

Der in Figur 3 dargestellte alternative Aufbau eines Energiespeichers mittels eines Deckels 32 mit Schichtaufbau 33 wird in der später näher dargestellten Schnittdarstellung in Figur 5 erläutert. Die Isolierschicht 34 des Deckels 32 stellt, ebenso wie bei der Ausführung mit Betonbalken eine ausreichend gute Isolierung gegenüber der Umgebung dar, um dem Energiespeicher seine erfindungsgemäße Funktion zu verleihen.

Sowohl der in Figur 1 dargestellte Energiespeicher als auch die Ausführungsform nach Figur 3 können in vorteilhafter Weise auf der Innenseite mit einer Diffusionsdichtschicht 35 ausgestattet werden, welche beispielsweise in Form einer Metallfolie, insbesondere einer Aluminiumfolie ausgebildet sein kann. Diese Diffusionsdichtschicht 35 verhindert, dass das wärmespeichernde Medium langsam in die Wände hinein und durch diese hindurch diffundiert, und sich daraus negative Eigenschaften des Energiespeichers ergeben.

Figur 4 zeigt einen Ausschnitt eines erfindungsgemäßen Energiespeichers mit einem Deckel 40, welcher in vorteilhafter Weise mit einer schwimmend gelagerten Drehscheibe 41 ausgebildet ist. Der Deckel 40 umfasst eine untere Trägerschicht 42, welche entweder in Form eines Schichtaufbaus, der in Figur 5 beschrieben wird, oder in Form einer Betonbalkendecke, wie in Figur 1 beschrieben, vorliegen kann. Zwischen der Trägerschicht 42 und der Drehscheibe 41 kann als Lager-Mittel beispielsweise Wasser 43 vorgesehen sein, so dass die Drehscheibe 41 schwimmend auf dem Träger 42 gelagert ist. Eine derartige Drehscheibe ist beispielsweise für die Anordnung von Solarzellen hilfreich, welche dadurch leicht und kostengünstig der Sonne nachgeführt werden können und den Erwärmungsprozess des Energiespeichers unterstützen. Auch Photovoltaik-Elemente oder ähnliche Aufbauten sind denkbar. Alternativ zur schwimmenden Lagerung auf einem Fluid können auch mechanische Lagermittel vorgesehen sein, so dass die Drehscheibe 41 einfach maschinell oder von Hand drehbar gelagert ist.

Ähnlich wie in Figur 3 dargestellt, so ist auch in Figur 4 der Deckel 40 von der Seitenwand 45 gehalten, und durch die Stützwand 46 von unten her abgestützt, so dass er auf dem Langzeitenergiespeicher oberseitig abschließend aufliegt.

Figur 5 zeigt eine Schnittdarstellung eines Schichtaufbaus 33 eines Deckels 32, welcher sich als vorteilhafte Alternative zum Aufbau einer Betonbalkendecke darstellt, insbesondere wenn große Deckeldimensionen angestrebt werden. Grundsätzlich ist der Aufbau durch Betonbalken in der Größe nicht beschränkt, jedoch sind Standardbetonbalken nur bis zu einer Länge von ca. 10 m kostengünstig zu erhalten, so dass bei abweichenden oder größeren Dimensionierungen der entsprechende Schichtaufbau eine bevorzugte Ausführungsform darstellt. Der folgend näher beschriebene Schichtaufbau bietet darüber hinaus den Vorteil, dass er auf der Baustelle beim Errichten des Energiespeichers ermöglicht, den Deckel vor Ort herzustellen, also das Schichtsystem zu laminieren und aufzubauen, wodurch ggf. teure Transportkosten entfallen.

Der erfindungsgemäße Schichtaufbau des Deckels 32 umfasst eine untere Faser-Verbundschicht 50, eine darauf angeordnete Isolationsschicht 51, vorzugsweise in Form eines Polymerschaums, sowie eine wiederum darauf angeordnete weitere Faser-Verbundschicht 52. Die Faser-Verbundschichten 50 und 52 dienen zur Aufnahme der entsprechenden Schub- bzw. Zugbelastungen, welche der Deckel auf dem erfindungsgemäßen Energiespeicher aufnehmen muss. Je nach aufzubauender Deckelgröße können auch entsprechende Wiederholungen einzelner Schichtabfolgen aus Isolationsschicht 51 und Faser-Verbundschicht 52 erfolgen.

Oberseitig auf den Deckel aufgebracht kann vorzugsweise direkt auf der Faser-Verbundschicht oder unter Einfügung einer Zwischenlage ein Wetterschutz 53 vorhanden sein, welcher beispielsweise als Betonschicht oder andersartige Versiegelung ausgebildet ist.

### Bezugszeichenliste:

- 1: Energiespeicher
- 2: Deckel
- 3: Seitenwand
- 4: Wärmetauscher
- 5: Sauberkeitsschicht
- 6: Schaumglasisolation
- 6a: Polystyrolisolation
- 7: Isolationsschicht
- 8: Betonschicht
- 9: Dichtschicht (Boden)
- 10: Stützschicht
- 11: Faserverbundwerkstoff
- 12: Isolation Seitenwand
- 12a: Isolation Seitenwand
- 13: Stützschicht (Seitenwand)
- 14: Erdreich
- 15: Dichtschicht (Seitenwand)
- 16: Porenbeton-Isolation
- 16a: Polystyrolisolation
- 17: Isolationskörper (Schaumglas)
- 18: Betonbalken
- 19: Isolation (Abdeckung)
- 20: Armierung
- 21: Baugrube
- 22: Bodenplatte
- 30: Oberfläche
- 31: Fundament
- 32: Deckel
- 33: Schichtaufbau
- 34: Isolierschicht
- 35: Diffusionsdichtschicht
- 40: Deckel
- 41: Drehscheibe
- 42: Trägerschicht
- 43: Wasser
- 45: Seitenwand
- 46: Stützwand
- 50: Faser-Verbundschicht
- 51: Isolationsschicht
- 52: Faser-Verbundschicht
- 53: Wetterschutz

## Patentansprüche

1. Langzeit-Energiespeicher für thermische Energie zur Speicherung von Sonnenwärme, Prozesswärme oder Abwärme, umfassend einen vorzugsweise zylindrischen Behälter zur Aufnahme eines Energiespeichermediums, Mittel zur Zuführung und Entnahme von Energie aus dem Speicher, wobei der Behälter eine Bodenplatte, eine umlaufende Seitenwand und einen Deckel umfasst, und wobei der Boden, die Seitenwände und der Deckel gegenüber der Umgebung thermisch isoliert ausgebildet sind, **dadurch gekennzeichnet, dass** die Seitenwand von einer Armierung aus einem Faserverbundwerkstoff umgeben ist.

2. Lahgzeit-Energiespeicher nach Anspruch 1, **dadurch gekennzeichnet, dass** die Seitenwand als gemauerte Wand, insbesondere als Ziegelwand ausgebildet ist.

3. Langzeit-Energiespeicher nach Anspruch 1 oder 2, **dadurch gekennzeichnet, dass** die Bodenplatte als Mehrschichtsystem, insbesondere als eine Sauberkeitsschicht, eine Isolationsschicht, eine Stützschicht und/oder eine Dichtschicht umfassend ausgebildet ist.

4. Langzeit-Energiespeicher nach Anspruch 3, **dadurch gekennzeichnet, dass** die Sauberkeitsschicht vorzugsweise aus Beton, insbesondere aus Stahlbeton gebildet ist.

5. Langzeit-Energiespeicher nach Anspruch 3, **dadurch gekennzeichnet, dass** die Dichtschicht Beton und/oder Stahlbeton umfasst, und ggf. mit einem darauf angeordneten Dichtmittel versehen ist.

6. Langzeit-Energiespeicher nach Anspruch 3, **dadurch gekennzeichnet, dass** die Isolationsschicht zumindest teilweise aus Schaumglas oder Schaumbeton, insbesondere aus einzelnen Schaumglas- Bausteinen besteht, und gegebenenfalls die Zwischenräume zwischen dem Schaumglas in der Isolationsschicht Polymerschaum, insbesondere geschäumtes Polystyrol umfasst.

7. Langzeit-Energiespeicher nach einem der vorangegangenen Ansprüche, **dadurch gekennzeichnet, dass** die Seitenwand als Mehrschichtsystem, insbesondere eine Dichtschicht, vorzugsweise aus einem gewebeartigen Faserverbundwerkstoff, eine Formschicht, vorzugsweise eine Ziegelwand, eine Armierungsschicht, vorzugsweise aus einem gewebeartigen Faserverbundwerkstoff, sowie eine Isolationsschicht, vorzugsweise aus einem Polymerschaum, umfassend ausgebildet ist.

8. Langzeit-Energiespeicher nach einem der vorangegangenen Ansprüche, **dadurch gekennzeichnet, dass** die Seitenwand auf der Behälteraußenseite zumindest teilweise von einer Stützschicht, vorzugsweise aus Beton umgeben ist.

9. Langzeit-Energiespeicher nach einem der vorangegangenen Ansprüche, **dadurch gekennzeichnet, dass** der Deckel als Beton-Balken-Aufbau kombiniert mit Isolationsmaterialien ausgebildet ist.

10. Langzeit-Energiespeicher nach einem der vorangegangenen Ansprüche, **dadurch gekennzeichnet, dass** der Deckel selbsttragend ausgebildet ist.

11. Langzeit-Energiespeicher nach einem der vorangegangenen Ansprüche, **dadurch gekennzeichnet, dass** der Deckel schwimmend auf dem Energiespeichermedium, vorzugsweise auf Wasser gelagert ausgebildet ist.

12. Langzeit-Energiespeicher nach einem der vorangegangenen Ansprüche, **dadurch gekennzeichnet, dass** der Deckel in seinem auf der Seitenwand aufliegend gehalten wird, wobei vorzugsweise zwischen Seitenwand und Deckel zumindest teilweise ein Isolationskörper, insbesondere Schaumglas eingebettet ist.
